(19) Europäisches Patentamt
European Patent Office
Office européen des brevets

(11) **EP 3 944 944 B1**

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **20188418.6**

(22) Anmeldetag: **29.07.2020**

(51) Internationale Patentklassifikation (IPC):
**B29C 44/56** (2006.01)

(52) Gemeinsame Patentklassifikation (CPC):
**B29C 44/5627; B29C 44/5654; B29C 44/5681;**
B29K 2067/003; Y02E 10/72

(54) **KONTURIERTES STRUKTURELEMENT UND HERSTELLUNG DES KONTURIERTEN STRUKTURELEMENTS**

CONTOURED STRUCTURAL ELEMENT AND MANUFACTURE OF THE CONTOURED STRUCTURAL ELEMENT

ÉLÉMENT STRUCTUREL PROFILÉ ET FABRICATION DE L'ÉLÉMENT STRUCTUREL PROFILÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.02.2022 Patentblatt 2022/05**

(73) Patentinhaber: **Airex AG**
**5643 Sins (CH)**

(72) Erfinder:
• **GÄTZI, Roman**
**6333 Hünenberg See (CH)**
• **GAUL, Martin**
**5244 Birrhard (CH)**

• **RAKUTT, Dietmar**
**6330 Cham (CH)**

(74) Vertreter: **Patent- und Rechtsanwälte Behrmann Wagner**
**PartG mbB**
**Hegau-Tower**
**Maggistraße 5 (11. OG)**
**78224 Singen (DE)**

(56) Entgegenhaltungen:
WO-A1-2009/003477    WO-A2-2020/064717
DE-A1- 10 034 990    DE-A1-102015 203 375
DE-B4- 10 034 990    US-A- 3 841 958
US-A- 3 964 354      US-A- 4 121 008

## Beschreibung

Die vorliegende Erfindung betrifft ein konturiertes Strukturelement nach dem Oberbegriff des Anspruchs 1, sowie ein Verfahren zum Herstellen eines derartigen konturierten Strukturelements.

Gattungsgemäße konturierte Strukturelemente werden als Kernschicht in einem gekrümmten Sandwich-Verbundelement eingesetzt, insbesondere zur Herstellung von Windflügeln für Windkraftanlagen und/oder für Anwendungen im Bereich Marine, insbesondere zur Herstellung von Bootsrümpfen und Bootsdecks, im Bereich Schienenverkehr, im Massentransport auf der Straße und für strukturelle Anwendungen im Baubereich, wobei Bauteile einfache oder zweifache Krümmungen oder andere komplexe dreidimensionale Konturen aufweisen. Dabei wird das konturierte Strukturelement in einem gekrümmten Zustand sandwichartig mit einer oder mehreren Deckschichten, bevorzugt aus faserverstärktem Kunststoffmaterial verklebt, um ein gekrümmtes Sandwich-Verbundelement mit hoher Biegesteifigkeit bei gleichzeitig geringem Eigengewicht auszubilden.

Die DE 10 2012 102 689 A1 der Anmelderin zeigt ein plattenförmiges, teilweise verschweißtes, Strukturelement zur Verwendung als Kernschicht in einem Sandwich-Verbundelement auf, wobei das plattenförmige Strukturelement aus mehreren miteinander verschweißten Körpersegmenten aus einem extrusionsgeschäumten thermoplastischen Kunststoff, insbesondere PET, gebildet ist und wobei das plattenförmige Strukturelement aus einem geschäumten Kunststoffblock mittels eines Heißelementschneideverfahrens hergestellt wird.

Plattenförmige Strukturelemente für den Einsatz als Kernschicht in einem Sandwich-Verbundelement, zum Beispiel aus Balsaholz oder einem Kunststoffschaum, zeichnen sich gattungsgemäß durch ein geringes Eigengewicht, allerdings auch durch eine geringe Elastizität und eine geringe Bruchfestigkeit aus. Deshalb sind plattenförmige Strukturelemente nur bedingt als Kernschicht für gekrümmte Sandwich-Verbundelemente geeignet.

Aus der US 3 540 967 A1 ist ein Strukturelement beschrieben, welches geeignet und bestimmt ist zum Einsatz als Kernschicht in einem gekrümmten Sandwich-Verbundelement. Das Strukturelement besteht aus einzelnen Körperelementen oder Blöcken mit einem rechteckigen Querschnitt, die einseitig und mit einem bestimmten Abstand zueinander mit einem Gittergewebe, auch Scrimmaterial genannt, verbunden sind. Das Scrimmaterial, zum Beispiel ein Glasfasernetz, wirkt scharnierartig zwischen den einzelnen Körperelementen und ermöglicht eine Krümmung des Strukturelements. In der Herstellung werden mehrere plattenförmige Elemente des Rohmaterials mittels eines Sägeverfahrens in einzelne Blöcke aufgeteilt und anschließend einseitig mit dem Scrimmaterial versehen, wobei die Körperelemente mit einem Abstand zueinander angeordnet werden können. Dieser Abstand oder Zwischenraum zwischen den Körperelementen wird insbesondere dann gefordert, falls die Strukturelemente mit der Seite des Scrimmaterials in eine konkave Form gelegt werden sollen.

Ein gattungsgemäßes Scrimapplizierverfahren kann mehrere aufwändige, insbesondere zeitaufwändige Verfahrensschritte beinhalten. In dem Verfahren wird ein mit Klebeharz getränktes Scrimmaterial auf die Körperelemente aufgetragen und das Scrimmaterial ausgerichtet. Anschließend wird das Klebeharz ausgehärtet, wobei darauf geachtet werden muss, dass die Körperelemente dabei ihre Ausrichtung nicht verändern.

Aus dem Stand der Technik ist weiterhin ein alternatives Scrimapplizierverfahren bekannt, in dem auf eine steife Platte ohne Schlitze ein Scrimmaterial mit Kleber-vorgetränkten (Hotmelt) Fasern mittels Wärme und Druck aufgebracht wird. Anschließend wird die Platte mit Scrimmaterial in einer Längs- und Querrichtung einseitig geschlitzt oder gesägt.

In der EP 2 483 076 B1 wird ebenfalls ein konturiertes Strukturelement aufgezeigt, das durch eine Vielzahl an Körperelementen ausgebildet ist. Als scharnierartige Verbindung zwischen den Körperelementen wird ein Scrimmaterial eingesetzt, das getrennte Körperelemente zusammenhält und eine Verbindungsschicht zwischen nicht vollständig getrennten Körperelementen, die zum Beispiel durch Vertiefungen/Konturen im Strukturelement teilweise getrennt sind, verstärkt.

In der DE 10 2015 203 375 A1 wird ein Verfahren zur Bearbeitung von Schaumwerkstücken beschrieben, wobei ein rotierendes Werkzeug in einer Längsbewegung auf eine Oberfläche des Schaumwerkstücks gedrückt wird, um die Oberfläche zu verdichten. Dabei wird das Schaumwerkstück entlang der Oberfläche mit geringfügigen Vertiefungen und ohne Materialabtrag bearbeitet, um so eine dichte Oberfläche, insbesondere gegenüber Flüssigkeiten oder Gasen, herzustellen.

Die US 3 841 958 A zeigt eine Sandwich Struktur, wobei in einem Herstellungsverfahren Hohlräume in einem als Kern wirkenden Strukturelement mit einem flüssigen Kunststoffmaterial gefüllt werden und anschließend mit Deckschichten, vorzugsweise aus einer Glasgewebebahn, verbunden werden.

Die WO 2020/064717 A2 offenbart ein plattenförmiges und krümmbares Strukturelement als ein Kernelement für einen Sandwichverbund, wobei das Strukturelement mit Schlitzen oder Nuten versehen ist.

Die US 4 121 008 A zeigt ebenfalls ein Strukturelement als Kern eines Sanwichverbunds, das mit Einkerbungen versehen ist.

Die DE 100 34 990 A1 offenbart ein Strukturelement als Kernschicht eines Sandwichverbunds, wobei Schlitze in dem Strukturelement ausgebildet sind, um schalldämpfend zu wirken.

Die US 3 964 354 A zeigt ein krümmbares und schaumartiges Strukturelement als Kernschicht für einen Sandwichverbund, wobei hier ebenfalls Schlitze in dem Strukturelement ausgebildet sind.

Die WO 2009/003477 A1 offenbart eine weiteres Strukturelement als Kernschicht für Verbundmaterialien, wobei Nuten in das Strukturelement eingebracht werden können.

Gattungsgemäße Kernmaterialien aus geschäumten Kunststoff werden lokal porenweise zusammengehalten, wobei die Porenwände möglichst dünn ausgeführt werden, um das Gewicht des Kernmaterials für Leichtbauanwendungen zu reduzieren. Durch die porenweise lokale Querschnittsreduktion des Materials weist ein geschäumter Kunststoff in der makroskopischen Betrachtung ein sprödes Bruchverhalten auf. Dies ist auch der Fall, falls der Kunststoff im nicht geschäumten Zustand ein duktiles oder zähes Bruchverhalten aufweist. Deshalb ist bei konturierten Strukturelementen aus geschäumten Kunststoffen ein scharnierartig wirkendes Scrimmaterial notwendig.

Ausgehend von dem vorgenannten Stand der Technik liegt der Erfindung die Aufgabe zugrunde, ein zur Verwendung als Kernschicht in einem gekrümmten Sandwich-Verbundelement geeignetes konturiertes Strukturelement anzugeben, das so beschaffen ist, dass das konturierte Strukturelement vollständig aus einem geschäumten thermoplastischen Kunststoff besteht und wobei die Verbindungsschicht zwischen den Körperelementen so verstärkt ist, dass sie eine scharnierartige Krümmung der Körperelemente zueinander ermöglicht und in einem einfachen oder wenig aufwändigen Verfahren hergestellt werden kann.

Ferner besteht die Aufgabe darin, ein Verfahren zum Herstellen eines solchen konturierten Strukturelementes anzugeben sowie ein gekrümmtes Sandwich-Verbundelement mit einem solchen konturierten Strukturelement als Kernschicht.

Diese Aufgabe wird hinsichtlich des konturierten Strukturelementes mit den Merkmalen des unabhängigen Anspruchs 1, hinsichtlich des Verfahrens mit den Merkmalen des Anspruchs 11 und hinsichtlich des gekrümmten Sandwich-Verbundelementes mit den Merkmalen des Anspruchs 13 gelöst. Vorteilhafte Ausführungsformen sind Gegenstand der Unteransprüche.

Erfindungsgemäß wird ein konturiertes Strukturelement zur Verwendung als Kernschicht in einem gekrümmten Sandwich-Verbundelement vorgeschlagen, wobei das konturierte Strukturelement aus einem thermoplastischen Kunststoffschaum, insbesondere PET, gebildet ist, wobei das konturierte Strukturelement bis auf eine Verbindungsschicht in mehrere Körperelemente unterteilt ist und wobei die Körperelemente und die Verbindungsschicht parallel zu einer Grundfläche des in einem planen Zustand befindlichen konturierten Strukturelements ausgerichtet sind. Zumindest eine Oberflächenschicht der Verbindungschicht und die daran angrenzende Oberflächenschicht der Körperelemente weisen zumindest teilweise eine thermisch verdichtete Schicht auf, wobei die Körperelemente, die Verbindungsschicht und die thermisch verdichtete Schicht aus dem gleichen Material ausgebildet sind.

Dabei hat die Erfindung erstaunlicherweise erkannt, dass durch die erfindungsgemäße Verstärkung der Oberflächenschicht des konturierten Strukturelements, insbesondere im Bereich der Verbindungsschicht zwischen den Körperelementen, die Verwendung eines zusätzlichen Scrimmaterials ersetzt werden kann und dass aufwändige, insbesondere zeitaufwändigen Verfahrensschritte eines Scrimapplizierverfahrens mit dem erfindungsgemäßen Herstellungsverfahren umgangen werden können. Dadurch kann in besonders vorteilhafter Weise ein Strukturelement bereitgestellt werden, was sowohl eine hohe mechanische Stabilität aufweist und gleichzeitig ohne zusätzliche Verstärkungsmaterialien auskommt. Ebenfalls wurde besonders unerwartet erkannt, dass die thermisch verdichtete Schicht bei unterschiedlichen Methoden zu deren Herstellung oder Ausbildung staubarm oder staubfrei ausgebildet wird, beispielsweise durch Heißelementschneiden, so dass die Haft- oder Verbindungseigenschaften der thermisch verdichteten Schicht neben der mechanischen Stabilisierung besonders gut sind, beispielsweise um die thermisch verdichtete Schicht mit einer Deckschicht eines Sandwich-Verbundelements zu verbinden, insbesondere zu verkleben.

Die Erfindung hat weiterhin erkannt, dass durch ein thermisches verdichten einer Oberfläche des geschäumten Kunststoffes ein Teil der Poren geschlossen und der lokale Querschnitt vergrößert werden kann, sodass das duktile Bruchverhalten ähnlich einer perforierten Kunststofffolie eingestellt werden kann. Damit wirkt die thermisch verdichtete Schicht wie ein lokal verstärkendes Scrimmaterial und das Schaumstoffmaterial kann ohne merkliche Gewichtszunahme verstärkt werden.

Des Weiteren hat die Erfindung erkannt, dass die thermisch verdichtete Schicht nicht nur das konturierte Strukturelement stabilisiert, sondern die thermisch verdichtete Schicht teilversiegelt gleichzeitig auch die geöffneten Poren in einer zuvor mittels eines Schneideprozesses bearbeiteten Oberfläche des konturierten Strukturelements, sodass eine unnötige Harzaufnahme verhindert werden kann.

Die thermisch verdichtete Schicht wird dabei aus dem gleichen Material gebildet oder erzeugt wie die angrenzenden Körperelement und gegebenenfalls die Verbindungsschicht. Dies bedeutet, dass das erfindungsgemäße Strukturelement genau ein Material umfasst, welches in unterschiedlichen räumlichen Bereichen die Körperelemente und vorteilhaft in anderen räumlichen Bereichen die Verbindungsschicht ausbildet und welches zudem in einem thermisch verdichteten Zustand und abermals in räumlich anderen Bereichen die thermisch verdichtete Schicht bildet. Insgesamt resultiert also aus der Erfindung eine Kernschicht, die zwar mehrere unterschiedliche Bereiche aber nur ein Material aufweist, welches lokal in der verdichteten Schicht einen Umwandlungsprozess, nämlich einen Verdichtungsprozess, durchlaufen hat.

Erfindungsgemäß bildet die zumindest eine Oberflächenschicht der Verbindungsschicht und die daran angrenzende Oberflächenschicht der Körperelemente die Grundfläche des konturierten Strukturelements aus, wobei sich die thermisch verdichtete Schicht vollflächig über die Grundfläche des konturierten Strukturelements erstreckt. Diese Ausführungsform ist besonders vorteilhaft, falls das konturierte Strukturelement mittels eines Heißdrahtschneideverfahrens herstellbar ist und das Heißdrahtschneideverfahren gleichzeitig die Grundfläche des konturierten Strukturelements thermisch verdichtet und bevorzugt die Poren des konturierten Strukturelements thermisch teilversiegelt.

Durch ein Schneideverfahren zum Heraustrennen, d.h. Abtrennen eines plattenförmigen Strukturelementes aus einem Schaumstoffblock oder Schneiden von Vertiefungen in ein plattenförmiges Strukturelement, werden Poren des, vorzugsweise ansonsten überwiegend geschlossenzelligen Schaumstoffs geöffnet, sodass ein Klebe- oder Laminierharz, insbesondere ein Polyesterharz, Vinylesterharz, Epoxyharz oder Phenolharz, in die Poren des konturierten Strukturelements eindringen kann, wobei das Klebeharz ab einer gewissen Eindringtiefe und damit Eindringmenge sich nicht mehr positiv auf die Klebewirkung auswirkt, sondern stattdessen nur das Gewicht des konturierten Strukturelementes erhöht, was nachteilig ist für die Leichtbauanwendungen, in denen ein mit einem solchen konturierten Strukturelement gebildetes Sandwich-Bauteil als tragendes Konstruktionsbauteil eingesetzt werden soll. Dabei ist jedoch zu beachten, dass eine glatte, porenfreie Oberfläche sich ebenfalls nachteilig auf die Haftung des Klebeharzes auswirkt, da sich das Klebeharz nicht ausreichend in dem konturierten Strukturelement verankern kann.

Deshalb ist eine erfindungsgemäße thermisch verdichtete Schicht, die für den Kontakt mit Klebeharz vorgesehen ist, bevorzugt so ausgeführt, dass die thermisch teilversiegelte Oberfläche weniger Poren zum Eindringen von Klebeharz aufweist, als ein Bereich bei welchem die Oberfläche durch Sägen erzeugt wurde, wobei die verbleibenden offenen Poren eine Verankerung des Harzes ermöglichen.

Eine derartige thermisch teilversiegelte Schicht wird in der DE 10 2012 102 689 A1 beschrieben, wobei auf die entsprechende Offenbarung vollumfänglich Bezug genommen wird und die offenbarten Merkmale der teilversiegelten Schicht als zur Erfindung im Rahmen einer Weiterbildung hiermit in ihrer Gänze in die Anmeldung miteinbezogen werden.

Insbesondere falls das konturierte Strukturelement sandwichartig mit zwei Deckschichten verbunden sein soll, ist bevorzugt vorgesehen, dass eine im planen Zustand des konturierten Strukturelements parallel zur Grundfläche ausgerichtete, der Verbindungsschicht gegenüberliegende Oberfläche der Körperelemente eine thermisch verdichtete, bevorzugt teilversiegelte Oberflächenschicht aufweist. Dadurch wird erreicht, dass die mit der Deckschicht eines Sandwich-Verbundelements verklebten Oberflächen teilversiegelt sind, eine reduzierte Harzaufnahme und dadurch ein geringeres Gewicht des Sandwich-Verbundelements erreicht werden kann.

Weiter bevorzugt bildet die thermisch verdichtete Schicht in einem planen Zustand des konturierten Strukturelements eine plane und/oder gleichmäßig starke Schicht aus, sodass die Verbindungsschicht gleichmäßig über die Grundfläche des konturierten Strukturelements verstärkt und teilversiegelt ist. Dies ermöglicht, dass mechanische Schwachstellen und eine potenzielle Rissbildung an diesen Stellen und eine Rissfortsetzung verhindert werden können. Des Weiteren kann eine gleichmäßige Harzaufnahme und deshalb eine gleichmäßige Festigkeit einer Klebeverbindung zu einer Deckschicht eines Sandwich-Verbundelements erreicht werden.

Besonders bevorzugt sind zumindest die für den Kontakt mit Harzmaterial vorgesehenen Oberflächen des konturierten Strukturelements thermisch teilversiegelt. Bevorzugt sind auch Oberflächen zwischen den Körperelementen, die beispielsweise durch Schneidevorgänge in einer Platte erzeugt werden können, teilversiegelt, sodass auch dort eine Harzaufnahme reduziert wird.

Vorzugsweise liegt die Dicke der thermisch verdichteten Schicht im planen Zustand des konturierten Strukturelements senkrecht zur Grundfläche zwischen 0.01mm und 1.00mm, bevorzugt zwischen 0.10mm und 0.70mm, besonders bevorzugt zwischen 0.15mm und 0.60mm, ganz besonders bevorzugt zwischen 0.25mm und 0.35mm. Die mechanische Stabilität nimmt mit zunehmender Dicke zu, wobei demgegenüber die Haftung eines Klebeharzes an der thermisch verdichteten Schicht mit zunehmender Dicke abnimmt, da die Poren des thermoplastischen Kunststoffschaums zunehmend versiegelt werden. Eine erfindungsgemäße Dicke der thermisch verdichteten Schicht gewährleistet bevorzugt eine ausreichende mechanische Stabilität und gleichzeitig eine ausreichende Adhäsion zu einer Deckschicht eines Sandwich-Verbundelements.

Besonders bevorzugt bildet die thermisch verdichtete Schicht die Verbindungsschicht vollständig aus. In diesem Fall umfasst die Verbindungsschicht kein zusätzliches sprödes Schaumstoffmaterial, das im gekrümmten Zustand oder bei geringer Belastung brechen kann. Gebrochenes Schaumstoffmaterial kann zu einer Staubentwicklung oder zu losen Schaumstoffelementen führen, die ein Sandwich-Verbundelement verunreinigen und dessen mechanischen Eigenschaften herabsetzen können.

Für die thermisch verdichtete, bevorzugt teilversiegelte, Schicht sollte ein Glanzwert der thermisch verdichteten Oberfläche gemessen bei 60° nach DIN 67530-1982 zwischen 2 und 10 Glanzeinheiten betragen. 100 Glanzeinheiten entsprechen dabei einem Glasreferenzkörper, zum Beispiel eine plane, polierte schwarze Glasplatte. Falls die thermisch verdichtete Schicht mit einem Heißelementschneideverfahren hergestellt wird, dann sollte bei der Messung des Glanzwertes darauf geachtet werden, dass die Einstrahlungsrichtung parallel zur Schnittrichtung des Heißelementschneidens erfolgt. Der Verwendung des Glanzwertes als Parameter zur Beschreibung der Oberfläche der thermisch verdichteten Schicht liegt der Gedanke zugrunde, dass eine zu wenige Poren aufweisende, insbesondere vollständig versiegelte Oberfläche, die eine zu geringe Harzaufnahme aufweist, einen zu hohen Glanzwert erreicht, der dann mit einer schlechten Haftwirkung einhergeht und auf der anderen Seite eine zu stark poröse Oberfläche, wie diese durch Sägen erhalten wird, einen zu niedrigen Glanzwert aufweist, der zwar mit einer guten Haftung, jedoch mit einer zu hohen Harzaufnahme einhergeht.

In einer Weiterbildung ist das konturierte Strukturelement bevorzugt in Körperelemente nach einem regelmäßigen schachbrettartigen und/oder hexagonalen Muster unterteilt. Diese Unterteilung kann vorteilhafterweise in einem zweistufigen oder mehrstufigen Sägeverfahren realisiert werden. Dies ist besonders vorteilhaft, wenn der gekrümmte Zustand des Strukturelements nicht vorbestimmt ist und das konturierte Strukturelement für ein- oder zweiseitige Krümmungen und verschiedene Krümmungsradien universell eingesetzt werden soll.

Alternativ ist das konturierte Strukturelement entsprechend der Krümmung des Strukturelements unterteilt. Zum Beispiel indem das konturierte Strukturelement in einem gekrümmten ersten Abschnitt in eine erste Vielzahl an Körperelementen unterteilt ist und in einem zu dem ersten Abschnitt weniger stark gekrümmten zweiten Abschnitt in eine zweite Vielzahl an Körperelementen unterteilt ist, wobei die zweite Vielzahl kleiner ist als die erste Vielzahl und bevorzugt einen größeren Querschnitt oder ein größeres Volumen umfasst als die erste Vielzahl. Dies bedeutet, dass bevorzugt die Größe und/oder Form und/oder das Volumen der jeweiligen Körperelemente an die vom Strukturelement geforderte Form, insbesondere Krümmung angepasst werden kann.

Bevorzugt weisen die Körperelemente einen rechteckigen Querschnitt oder einen trapezoidalen Querschnitt auf. Ein rechteckiger Querschnitt ist besonders einfach herstellbar oder ausbildbar. Jedoch kann ein trapezoidaler Querschnitt vorteilhaft sein, falls Zwischenräume zwischen den Körperelementen im gekrümmten Zustand des konturierten Strukturelements geschlossen werden sollen.

In einer Weiterbildung sind die Körperelemente im gekrümmten Zustand des konturierten Strukturelements bevorzugt flächig miteinander thermisch verschweißt. Dadurch kann der gekrümmte Zustand des konturierten Strukturelements gefestigt werden. Falls der Zwischenraum zwischen den Körperelementen im gekrümmten Zustand des konturierten Strukturelements nicht vollständig geschlossen ist, dann ist bevorzugt, dass wenigstens die der Grundfläche des konturierten Strukturelements gegenüberliegenden Oberflächen der Körperelemente an den Kanten zu den Zwischenräumen zumindest linienförmig miteinander verschweißt sind, sodass die der Grundfläche des konturierten Strukturelements gegenüberliegende Seite eine geschlossene Oberfläche ausbildet, um ein Vordringen von Harzmaterial in die Zwischenräume zwischen den Körperelementen zu verhindern. Durch das Verschweißen der Körperelemente kann die Steifigkeit eines gekrümmten Sandwich-Verbundelements zusätzlich erhöht werden.

Besonders zweckmäßig ist es, wenn das Zusammenschweißen der Körpersegmente durch flächiges Anschmelzen, beispielsweise mittels eines Heißelementes oder Heizschwertes, der zu verbindenden Seitenflächen der Körpersegmente und nachfolgendes Zusammenfügen derselben erfolgt, wobei die Schmelzzonen unter Ausbildung der flächigen Schweißnähte in Form von porenarmen oder porenfreien Kunststoffzwischenschichten aushärten, was vorzugsweise ohne weitere Zusätze wie Klebeharze erfolgt, so dass das konturierten Strukturelement als solches ausschließlich aus Kunststoff und zwar aus dem thermoplastischen Kunststoff, insbesondere PET, besteht.

In einer besonders vorteilhaften Ausführungsform der Erfindung wird die Temperatur des oder der Heißelemente so eingestellt und gleichzeitig die Relativgeschwindigkeit zwischen Heißelement bzw. Elementen und Körperelement so gewählt, dass der vorerwähnte Glanzwert aus einem Wertebereich zwischen 2 und 10 erreicht wird.

Weiterhin ist bevorzugt, dass die thermisch verdichtete Schicht mehr als 20, bevorzugt mehr als 40, besonders bevorzugt mehr als 300, ganz besonders bevorzugt mehr als 1000 Biegezyklen zwischen 0° und 180° standhält, wobei die Biegung so ausgeführt wird, dass sich der Zwischenraum zwischen den Körperelementen vergrößert. Bei einem konturierten Strukturelement ohne thermisch verdichtete Schicht bricht die Verbindungsschicht durchschnittlich bereits bei weniger als 20 Biegezyklen.

Vorzugsweise wird die verdichtete, bevorzugt teilversiegelte Schicht des konturierten Strukturelements durch Heißdrahtschneiden erzeugt. Ein Zuschneiden eines konturierten Strukturelements durch Heißdrahtschneiden ermöglicht vorteilhafterweise die gleichzeitige thermische Verdichtung der geschnittenen Oberflächen des konturierten Strukturelements.

Die Erfindung betrifft auch ein Verfahren zum Herstellen eines zuvor beschriebenen, nach dem Konzept der Erfindung ausgebildeten konturierten Strukturelements, wobei ein aus einem vorzugsweise extrusionsgeschäumten thermoplastischen Kunststoffblock, insbesondere PET, herausgetrenntes plattenförmiges Strukturelement bereitgestellt wird. Dabei werden die herausgetrennten Oberflächen thermisch verdichtet, vorzugsweise wird zumindest die Grundfläche des plattenförmigen Strukturelements thermisch verdichtet.

Bevorzugt kann das Erzeugen der thermisch verdichteten Oberfläche, vorzugsweise der thermisch verdichteten Grundfläche, mittels Heißelementscheiden erzeugt oder hergestellt werden. Grundsätzlich können jedoch auch andere Verfahren zum Einsatz kommen. Beispielsweise kann ein Kontakt mit einer erwärmten Oberfläche verwendet werden, um die thermisch verdichtete Schicht herzustellen.

Es kann gemäß der Lehre der Erfindung vorgesehen sein, dass die thermisch verdichtete Schicht ausgebildet wird, bevor die Körperelemente, beispielsweise durch Schneiden, Sägen, Heißelementschneiden, Fräsen oder dergleichen ausgebildet werden. Dies kann besonders dann vorteilhaft sein, wenn die Erzeugung der thermisch verdichteten Schicht gleichzeitig mit dem Schneiden von plattenförmigen Strukturelementen aus einem größeren Schaumstoffkörper oder Schaumstoffblock erzeugt wird, so dass dann zunächst plattenförmige Strukturelemente mit ein- oder beidseitig thermisch verdichteten Oberflächen erzeugt werden. Ausgehend von einer dieser Oberflächen mit oder ohne thermisch verdichteter Schicht oder Oberflächenschicht, können dann Vertiefungen/Konturen erzeugt werden, um das plattenförmige Strukturelement zu konturieren und in Körperelemente mit Verbindungsschicht zu unterteilen.

Alternativ kann jedoch auch vorgesehen sein, dass ein konturiertes Strukturelement zunächst ausgebildet wird, das dann im Nachgang mit der oder den thermisch verdichteten Schichten oder Oberflächenschichten versehen wird.

Die folgende Beschreibung eines Heißelementschneideverfahrens zur Herstellung eines plattenförmigen Strukturelements mit einer thermisch teilversiegelten Schicht ist in der DE 10 2012 102 689 A1 aufgeführt, wobei auf die entsprechende Offenbarung vollumfänglich Bezug genommen wird. Der Offenbarungsgehalt der DE 10 2012 102 689 A1 ist also vollumfänglich Bestandteil dieser Offenbarung.

Als kritisch für die Verfahrensführung des Heißelementschneideverfahrens hat sich die Temperatur des Heißelementes, insbesondere eines Heißdrahtes, insbesondere in Kombination mit der Relativgeschwindigkeit des Heißelementes zu einem Schaumstoffblock erwiesen. Gute Ergebnisse im Hinblick auf die gewünschte Oberflächenbeschaffenheit wurden erreicht mit einer Temperatur des Heißelementes aus einem Wertebereich zwischen 300°C und 700°C, insbesondere zwischen 400°C und 700°C, vorzugsweise zwischen 500°C und 700°C, wobei diese Temperatur zumindest zu Beginn eines Schneid- bzw. Abtrennvorgangs vorgesehen sein sollte. Vorzugsweise wird die Temperatur zumindest näherungsweise auch während des Schneid- bzw. Abtrennvorgangs gehalten.

Wesentlich ist es zudem, dass in Kombination mit der oben gezeigten Temperatur, zum Abtrennen eine Relativgeschwindigkeit zwischen Heißelement und Schaumstoffblock durch Bewegen des Heißelementes und/oder des Schaumstoffblockes aus einem Wertebereich zwischen 50 mm/min und 150mm/min.

Vorgenannte Temperatur und Vorschubgeschwindigkeitswerte gelten insbesondere für ein Schaumstoffblockmaterial mit einer Dichte (inklusive Lufteinschlüsse) aus einem Bereich zwischen 50kg/m$^3$ und 250kg/m$^3$, bevorzugt zwischen 60kg/m$^3$ und 150kg/m$^3$.

Es wurde gefunden, dass die optimale Vorschubgeschwindigkeit zur Erzielung der gewünschten Glanzwerte abhängig ist von der Dichte des zu bearbeitenden Schaumstoffblocks. Für einen Schaumstoffblock mit einer Dichte von 60kg/m$^3$ wird die Vorschubgeschwindigkeit des Heißelements bevorzugt aus einem Wertebereich zwischen 100mm/min und 140mm/min gewählt. Für einen Schaumstoffblock mit einer Dichte von 100kg/m$^3$ wird die Vorschubgeschwindigkeit bevorzugt aus einem Wertebereich zwischen 65mm/min und 85mm/min gewählt. Für einen Schaumstoffblock mit einer Dichte von 130kg/m$^3$ wird die Vorschubgeschwindigkeit bevorzugt aus einem Wertebereich zwischen 50mm/min und 70mm/min gewählt.

Dies hängt wiederum damit zusammen, dass die benötigte Versiegelungsenergie pro mittels des Heißelements teilzuversiegelnder Fläche abhängig ist von der Dichte des Schaumstoffblocks.

Dabei wurde gefunden, dass folgender funktionaler Zusammenhang für die Berechnung der Energie gilt:

$$E = \tfrac{1}{2} \times (U \times I) / (v \times L)$$

E steht dabei für die einzubringende Energie pro teilzuversiegelnder Fläche. Die eingesetzte elektrische Energie berechnet sich aus dem Produkt der an das Heißelement angelegten elektrischen Spannung U und der Stromstärke I des durch das Heißelement fließenden Stroms. Dieses Produkt wird geteilt durch das Produkt aus der Vorschubgeschwindigkeit v des Heißelementes, insbesondere des Heißdrahtes und der Länge L des Heißelementes, gemessen senkrecht zur Vorschubrichtung. Die Einheit der Energie lautet Wh/m$^2$, wobei W für Watt, h für Stunden und m$^2$ für Quadratmeter steht. Der Faktor ½ berücksichtigt, dass gleichzeitig pro Heißelement zwei teilversiegelte Flächen erzeugt werden.

Bevorzugt entspricht dabei die Breite des Schaumstoffblocks, gemessen parallel zu Längenerstreckung des Heißelementes zumindest 60%, bevorzugt zwischen 70% und 95% der Länge des Heißelementes.

Optimale Glanzwerte der resultierenden Oberfläche der entsprechenden Flächenseite werden erzielt, wenn eine Energie pro teilzuversiegelnder Fläche über das Heißelement, insbesondere den Heißdraht eingebracht wird, die sich nach dem folgenden funktionalen, linearen Zusammenhang, berechnet:

$$E \, [\text{Wh/m}^2] = m \, [\text{Whm/kg}] \times \text{Dichte Schaumstoffblock} \, [\text{kg/m}^3]$$
$$+ \, b \, [\text{Wh/m}^2]$$

Dabei wird m vorzugsweise aus einem Wertebereich zwischen +0,12 und +0,20Whm/kg gewählt, noch weiter bevorzugt aus einem Wertebereich zwischen +0,12 und +0,18Whm/kg. Gleichzeitig wird b bevorzugt aus einem Wertebereich zwischen -0,5 und +0,5Wh/m², ganz besonders bevorzugt zwischen -0,5 und 0.0Wh/m² gewählt.

Für eine Dichte von 60 kg/m³ ergeben sich somit die folgenden, bevorzugten Grenzen für die vorzugsweise eingebrachte Energie/Versiegelungsenergie pro Fläche: 6,7Wh/m² bis 12,5Wh/m², insbesondere 6,7Wh/m² bis 10,8Wh/m². Für eine Dichte des Schaumstoffblocks von 100kg/m³ ergeben sich bevorzugte Energiebereiche zwischen 11,5Wh/m² und 20,5Wh/m², bevorzugt zwischen 11,5Wh/m² und 18,0Wh/m². Für ein Schaumstoffmaterial mit einer Dichte von 130kg/m³ ergeben sich folgende bevorzugte Grenzen für die eingebrachte Energie zwischen 15,1Wh/m² und 26.5Wh/m², vorzugsweise zwischen 15,1Wh/m² und 23,4Wh/m².

Als ganz besonders bevorzugt hat sich herausgestellt, wenn der Durchmesser des, vorzugsweise zylindrischen Heißdrahtes aus einem Durchmesserwertebereich zwischen 0,25mm und 2,0mm, insbesondere zwischen 0,25mm und 1,00mm, vorzugsweise zwischen 0.40mm und 0.80mm gewählt ist.

Wie bereits erwähnt, kann vorteilhaft auf das Aufteilen des Schaumstoffblocks in das plattenförmige Strukturelement das Erzeugen, insbesondere Schneiden von Vertiefungen in zumindest eine Seite, insbesondere die der Grundfläche des plattenförmigen Strukturelements gegenüberliegenden Seite mittels Säge-, Lasergravier-, Fräs-, oder Heißschneideverfahren folgen, sodass das plattenförmige Strukturelement bis auf eine Verbindungsschicht in mehrere Körperelemente unterteilt wird und das erfindungsgemäße konturierte Strukturelement ausgebildet wird.

Insbesondere ein Lasergravier- oder Heißschneideverfahren kann gleichzeitig die geschnittenen Oberflächen der Körperelemente thermisch verdichten und die Verbindungsschicht zusätzlich verstärken. Bevorzugt wird jedoch ein Sägeverfahren aufgrund der höheren Verfahrensgeschwindigkeit eingesetzt.

Die Erfindung führt auch auf ein Sandwich-Verbundelement, insbesondere zur Herstellung von Windflügeln für Windkraftanlagen und/oder zum Einsatz im Bereich Marine, insbesondere zur Herstellung von Bootsrümpfen, Bootsdecks, im Bereich Schienenverkehr, insbesondere zur Herstellung von Zugfronten, Dächer, Böden, Wandelemente von Eisenbahnwaggons, im Massentransport auf der Straße, insbesondere zur Herstellung von Busdächern, - böden, - fronten, für strukturelle Anwendungen im Baubereich, zum Beispiel Dächer, u. a. m., wobei das gekrümmte Sandwich-Verbundelement neben dem erfindungsgemäßen konturierten Strukturelement mindestens eine mit dem konturierten Strukturelement verbundene Deckschicht umfasst, insbesondere zwei das konturierte Strukturelement zwischen sich aufnehmende Deckschichten, wobei es bevorzugt ist, dass die mindestens eine Deckschicht aus glasfaserverstärktem Kunststoff ausgebildet ist.

Bevorzugt geeignet ist die Erfindung zur Herstellung von gekrümmten Sandwich-Verbundelementen im Harz-Infusionsverfahren. Dabei wird der Faser-Verbund, Gelege oder Gewebe, inkl. Kernmaterial im trockenen Zustand aufgebaut. Anschließend wird er mittels vakuumdichter Folie abgedeckt und am Rand abgedichtet. Ein an der Folie angelegtes Vakuum zieht schließlich das flüssige Harz aus einem Vorratsbehälter durch den Aufbau und tränkt somit den Verbund. Das Aushärten bzw. die Harzreaktion findet typischerweise bei Raumtemperatur statt, kann aber auch bei erhöhter Temperatur erfolgen.

Die Erfindung betrifft also insbesondere auch ein gekrümmtes Sandwich-Verbundelement, welches im Harzinfusionsverfahren hergestellt wurde, wobei wesentlich ist, dass das Harz, konkret das Laminierharz mittels Vakuum in den Schichtaufbau eingesaugt wird, wobei es besonders bevorzugt ist, wenn das die Deckschichten mit dem konturierten Strukturelement verbindende Harz gleichzeitig das Harz der Deckschichten ist, mit welchem das Gelege bzw. Gewebe der Deckschichten getränkt ist.

Weitere Vorteile und Einzelheiten der Erfindung ergeben sich aus der nachfolgenden Beschreibung bevorzugter Ausführungsformen der Erfindung sowie anhand der Zeichnungen.

Es zeigen:

Fig. 1: eine perspektivische Ansicht des konturierten Strukturelements bestehend aus rechteckigen Körperelemente mit einer Verbindungsschicht und einer thermisch verdichteten Grundfläche,

Fig. 2a: eine Seitenansicht zweier Körperelemente gemäß der Fig. 1 mit Photographie des entsprechenden Bauteils,

Fig. 2b: eine Seitenansicht gemäß der Fig. 2a in einem gekrümmten Zustand,

Fig. 3a: eine Seitenansicht zweier Körperelemente gemäß der Fig. 2a, wobei die Körperelemente einen trapezoidalen Querschnitt aufweisen,

Fig. 3b: eine Seitenansicht gemäß der Fig. 3a in einem gekrümmten Zustand,

Fig. 4a bis Fig. 4c: eine Seitenansicht zweier Körperelemente gemäß der Fig. 2a, wobei das konturierte Structure-

lement in drei gebogenen Zuständen zwischen 0° und 180° dargestellt ist,

Fig. 5a:     eine Seitenansicht des konturierten Strukturelements, wobei die Verbindungsschicht in der Grundfläche und der entgegengesetzten Oberfläche der Körperelemente angeordnet ist,

Fig. 5b:     eine Seitenansicht des konturierten Strukturelements gemäß der Fig. 5a in einem zweifach gekrümmten Zustand,

Fig. 6a:     eine Seitenansicht zweier konturierter Strukturelemente, die miteinander thermisch verschweißt sind und

Fig. 6b:     eine Seitenansicht zweier konturierter Strukturelemente gemäß der Fig. 6a in einem zweifach gekrümmten Zustand, die miteinander thermisch verschweißt sind.

Gleiche Elemente beziehungsweise Elemente mit gleicher Funktion sind in den Figuren mit den gleichen Bezugsziffern versehen.

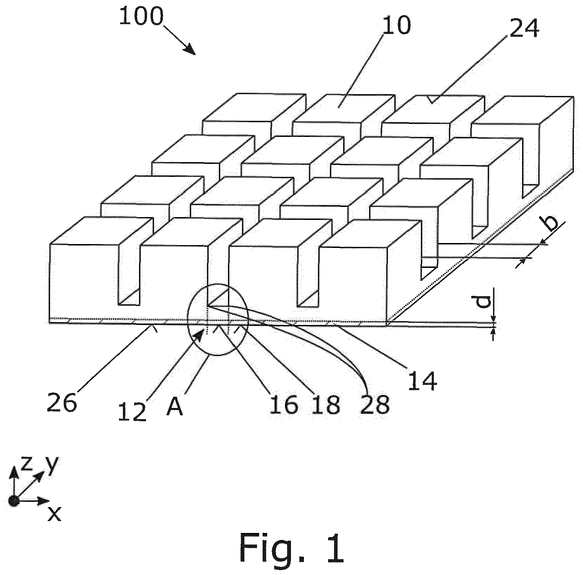

In der Fig. 1 ist ein konturiertes Strukturelement 100 zur Verwendung als Kernschicht in einem gekrümmten Sandwich-Verbundelement aus einem thermoplastischen Kunststoffschaum dargestellt, wobei das konturierte Strukturelement 100 in mehrere Körperelemente 10 bis auf eine Verbindungsschicht 12 aus gleichem Material unterteilt ist. Das konturierte Strukturelement 100 ist in einem planen, nicht gekrümmten Zustand dargestellt und die Körperelemente 10 und die Verbindungsschicht 12 verlaufen parallel zu einer Grundfläche 26 des konturierten Strukturelements 100. Gemäß der Definition der vorliegenden Erfindung ist, abgesehen von -Randbereichen, ein Übergang zwischen angrenzenden Körperelementen 10 durch eine Verbindungsschicht 12 ausgebildet, der in der Fig. 1 in einem Verbindungsbereich A gekennzeichnet und von gestrichelten vertikalen Linien begrenzt ist.

Eine Oberflächenschicht 16 der Verbindungsschicht 12 und die daran angrenzende Oberflächenschicht 18 der Körperelemente 10 weisen eine thermisch verdichtete Schicht 14 auf. Die thermisch verdichtete Schicht 14 besteht aus dem gleichen Material wie die Körperelemente 10 und die Verbindungsschicht 12.

Das konturierte Strukturelement 100 ist bevorzugt so unterteilt, dass die Oberflächenschicht 16 der Verbindungsschicht 12 und die Oberflächenschicht 18 der Körperelemente 10 die Grundfläche 26 des konturierten Strukturelements 100 ausbilden. Bevorzugt weist in diesem Fall die gesamte Grundfläche 26 des konturierten Strukturelements 100 eine vollflächig thermisch verdichtete Schicht 14 auf. Vorteilhafterweise ist diese vollflächig thermisch verdichtete Schicht 14 mittels eines Heißdrahtschneideverfahrens herstellbar, wobei in kurzer Zeit die gesamte Grundfläche 26 des konturierten Strukturelements 100 verdichtbar ist.

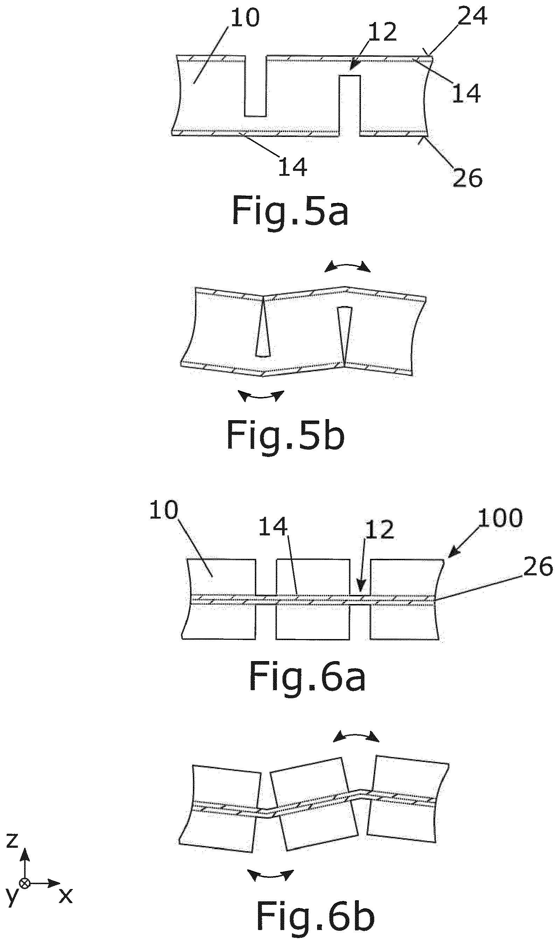

Vorzugsweise weist auch eine im planen Zustand des konturierten Strukturelements 100 parallel zur Grundfläche 26 ausgerichtete, den Verbindungsschicht 12 gegenüberliegende Oberfläche 24 der Körperelemente 10 eine thermisch verdichtete, bevorzugt teilversiegelte Oberflächenschicht 14 auf (siehe Fig. 5a). Insbesondere falls das konturierte Strukturelement 100 auf beiden Seiten mit Harzmaterial in Kontakt kommt, ist eine beidseitige thermische Teilversiegelung besonders vorteilhaft.

Es sei angemerkt, dass die thermisch verdichtete Schicht 14 des konturierten Strukturelements 100 sich auf eine thermische Behandlung des konturierten Strukturelements 100 selbst bezieht und nicht auf eine nachträglich angebrachte/angeklebte thermisch verdichtete Schicht aus einem identischen oder anderem Material. Dies bedeutet, dass zwar ein Übergang von einem verdichteten zu einem nicht verdichteten Bereich im gleichen zusammenhängenden oder einstückigen Material gegeben ist, dass jedoch keine Verbindungsfläche oder Verbindungsflächen vorliegen, an denen unterschiedliche Materialschichten miteinander verbunden sind. Die Körperelemente 10, die Verbindungsschicht 12 und die thermisch verdichtete Schicht 14 sind also bevorzugt aus dem gleichen Material, sowie aus einem einstückigen Grundelement, zum Beispiel ein plattenförmiges Strukturelement, herstellbar.

Alternativ ist es möglich, dass die Oberflächenschicht 16 der Verbindungsschicht 12 und die daran angrenzende Oberflächenschicht 18 der Körperelemente 10 teilweise, bevorzugt in einem Verbindungsbereich A, eine thermisch verdichtete Schicht 14 aufweisen, sodass insbesondere auch der Bereich der Kanten 28 zwischen der Verbindungsschicht 12 und den Körperelementen 10 durch die thermisch verdichtete Schicht 14 stabilisiert ist. Bei einer Biegebeanspruchung des konturierten Strukturelements 100 kann insbesondere der Bereich der Kanten 28 der Verbindungsschicht 12 aufgrund von erhöhten Kerbspannungen brechen, sodass die Oberflächenschicht 18 der Körperelemente 10 zumindest in dem Verbindungsbereich A verstärkt ist.

In einem planen Zustand des konturierten Strukturelements 100 bildet die thermisch verdichtete Schicht 14 bevorzugt eine plane und/oder gleichmäßig starke Schicht aus, sodass die Verbindungsschicht 12 gleichmäßig über die Grundfläche 26 des konturierten Strukturelements 100 verstärkt ist.

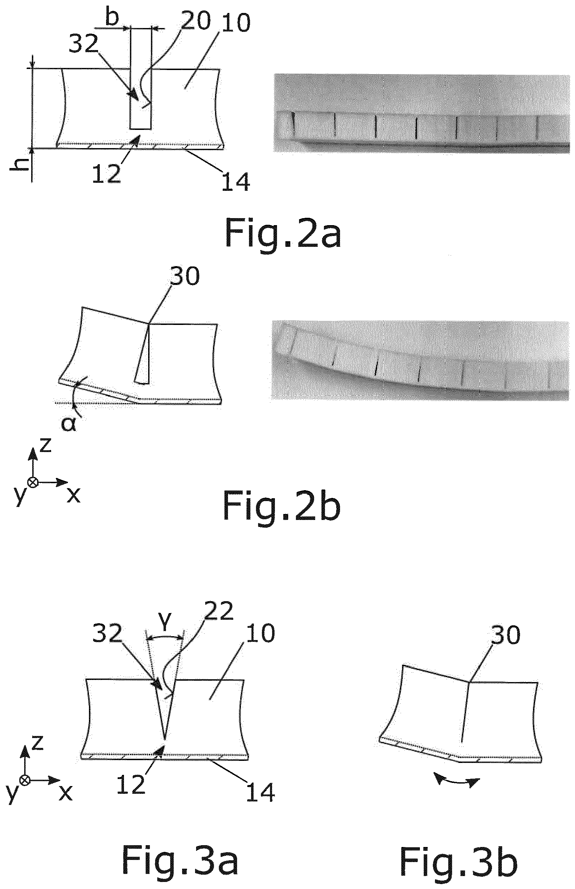

Weiter bevorzugt sind zumindest die für den Kontakt mit Harzmaterial vorgesehenen Oberflächen des konturierten Strukturelements 100 thermisch teilversiegelt. Zu den bevorzugten Oberflächen des konturierten Strukturelements 100 zählen insbesondere die Grundfläche 26 des konturierten Strukturelements 100 und die der Grundfläche 26 gegenüberliegende Oberfläche 24 der Körperelemente 10. Zusätzlich können auch die gemäß der Fig. 2a einem Zwischenraum 32 zugewandten Oberflächen 20 der Körperelemente 10 thermisch teilversiegelt sein. Die Teilversiegelung kann die Verbindungseigenschaften und die Harzaufnahme der Oberflächen vorteilhaft beeinflussen. Außerdem kann dadurch eine Staubreduzierung erreicht werden, die abermals die vorangehend genannten Eigenschaften verbessert.

Vorzugsweise liegt die Dicke d der thermisch verdichteten Schicht 14 im planen Zustand des konturierten Strukturelements 100 senkrecht zur Grundfläche 26 zwischen 0.01mm und 1.00mm, bevorzugt zwischen 0.10mm und 0.70mm, besonders bevorzugt zwischen 0.15mm und 0.60mm, ganz besonders bevorzugt zwischen 0.25mm und 0.35mm. Bevorzugt bei dieser Dicke d der thermisch verdichteten Schicht 14 ist eine ausreichende mechanische Stabilität der Verbindungsschicht 12 und eine ausreichende Adhäsion zu einer Deckschicht eines Sandwich-Verbundelements gewährleistet. Dabei nimmt die mechanische Stabilität mit zunehmender Dicke d zu. Demgegenüber nimmt die Adhäsion zu einer Deckschicht mit zunehmender Dicke d ab, da Poren des thermoplastischen Kunststoffschaums zunehmend versiegelt werden, sodass in einem späteren Klebeprozess oder Laminierprozess oder Vakuuminjektionsprozess ein Harzmaterial sich nicht in der vergrößerten Oberfläche der Poren verankern kann.

Die Verbindungsschicht 12 kann so ausgeführt sein, dass sie gerade durch die thermisch verdichtete Schicht 14 selbst ausgebildet ist. Zum Beispiel kann das konturierte Strukturelement 100 bis in oder kurz vor die thermisch verdichtete Schicht 14 gesägt sein. So kann verhindert werden, dass nicht verdichtetes und deshalb sprödes Schaumstoffmaterial zwischen den Körperelementen 10 verbleibt, das unter Umständen leicht brechen kann und das Sandwich-Verbundelement verunreinigen kann oder durch lose Elemente die mechanische Stabilität des Sandwich-Verbundelements herabsetzen kann.

Alternativ sollte die thermisch nicht ausgehärtete Schicht der Verbindungsschicht 12 bevorzugt auf ein Minimum reduziert werden, da sie sonst die Krümmung des Strukturelements und die scharnierartige Wirkung der Verbindungsschicht 12 einschränken würde.

Für die thermisch verdichtete, bevorzugt teilversiegelte Schicht 14 sollte ein Glanzwert der thermisch verdichteten Oberfläche, zum Beispiel die thermisch verdichtete Grundfläche 26, gemessen bei 60° nach DIN 67530-1982 zwischen 2 und 10 Glanzeinheiten betragen.

Das konturierte Strukturelement 100 ist, wie in der Fig. 1 dargestellt, bevorzugt in Körperelemente 10 nach einem regelmäßigen schachbrettartigen Muster unterteilt. Diese Unterteilung kann vorteilhafterweise in einem zweistufigen Sägeverfahren realisiert werden, bei dem bevorzugt winklig, insbesondere rechtwinklig, zueinander angeordnete Sägemuster mit einer oder mehreren Sägen erzeugt werden. Zusätzlich oder alternativ kann das konturierte Strukturelement 100 auch nach einem vorzugsweise regelmäßigen hexagonalen Muster in Körperelemente 10 unterteilt sein.

Wie in der Fig. 1 und der Detailansicht in der Fig. 2a dargestellt, weisen die Körperelemente 10 einen vorzugsweise rechteckigen Querschnitt auf. Dieser Querschnitt kann vorteilhafterweise in einem zweistufigen Sägeverfahren realisiert werden. In einem gekrümmten Zustand des konturierten Strukturelements 100 gemäß der Fig. 2b können die Körperelemente um die y-Achse gebogen werden. Eine zweiseitige, hier nicht dargestellte, Biegung um die x- und die y-Achse ist ebenfalls möglich. Die Körperelemente 10 werden bevorzugt zueinander gebogen bis sich die innenliegenden Flächen 20 der Körperelemente 10 zumindest teilweise in einer Kontaktfläche 30 berühren. Körperelemente 10 mit einem rechteckigen Querschnitt sind einfach herstellbar, jedoch weist dann das konturierte Strukturelement 100 auch im gekrümmten Zustand Zwischenräume 32 auf. Diese Zwischenräume 32 könnten in einem späteren Verfahren mit Harzmaterial gefüllt werden und so könnte sich das Gewicht des konturierten Strukturelements 100 erhöhen.

Der maximale Krümmungswinkel $\alpha$ zwischen zwei Körperelementen 10 liegt vorteilhafterweise zwischen 2° bis 3°, sodass die Steigungssprünge in der gekrümmte Oberfläche 26 des konturierten Strukturelements 100 klein genug sind, damit die Abweichung z.B. von einem Kreisbogen mit Harzmaterial ausgeglichen werden kann, sodass die Steigungssprünge in einer mit dem gekrümmten konturierten Strukturelement 100 verklebten Deckschicht nicht übertragen werden. Bei stark gekrümmten Sandwich-Verbundelementen muss entsprechend die Anzahl der Körperelemente 10 pro Längeneinheit erhöht werden.

Um den Einschluss von Harzmaterial in dem Zwischenraum 32 zu verhindern, weisen die Körperelemente 10 alternativ einen trapezoidalen Querschnitt gemäß der Fig. 3a auf, sodass im gekrümmten Zustand des konturierten Strukturelements 100 die dem Zwischenraum 32 zugewandten Oberflächen 20 der Körperelemente 10 zumindest teilweise, bevorzugt über die gesamte Oberfläche kontaktieren. In der Fig. 3b ist ein solch gekrümmter Zustand dargestellt, wobei der gesamte Zwischenraum 32 zwischen den Körperelementen 10 geschlossen ist. Bevorzugt sind die Dimensionen des trapezoidalen Querschnitts je nach Krümmungswinkel $\alpha$ ausgelegt, sodass die Körperelemente 10 sich bevorzugt vollflächig im gekrümmten Zustand des konturierten Strukturelements 100 kontaktieren, zum Beispiel indem ein Öffnungswinkel $\gamma$ des Zwischenraumes 32 zwischen den trapezoidalen Körperelementen entsprechend der vorgesehenen Krümmung des Strukturelements 100 ausgelegt ist. Dabei kann der Querschnitt der Körperelemente 10 eine komplexere Geometrie einnehmen, falls eine zweiseitige Krümmung um die x-Achse und um die y-Achse gefordert ist und die jeweilige Krümmung unterschiedliche Krümmungswinkel aufweisen.

Vorzugsweise ist eine Breite b des Zwischenraums 32 zwischen den Körperelementen 10 und eine Höhe h des konturierten Strukturelements 100 oder eine Höhe des Zwischenraums 32 entsprechend der Krümmung des konturierten Strukturelements 100 so gewählt, dass im gekrümmten Zustand des konturierten Strukturelements 100 die sich einem Zwischenraum 32 zugewandten Oberflächen 20 der Körperelemente 10 zumindest teilweise, bevorzugt über die gesamte Oberfläche 20 kontaktieren. Mit einem geschlossenen Zwischenraum 32 kann eine Harzaufnahme verhindert werden. Dabei kann die Unterteilung des konturierten Strukturelements 100 von einem regelmäßigen schachbrettartigen Muster abweichen.

Weiterhin wäre es denkbar, Körperelemente 10 entlang der Kontaktfläche 30 miteinander thermisch zu verschweißen, sodass der gekrümmte Zustand des konturierten Strukturelements 100 gefestigt wird und um ein Vordringen von Harzmaterial in die Zwischenräume 32 der Körperelemente 10 dauerhaft zu verhindern. Bevorzugt sind die Kontaktflächen 30, wie in der Fig. 3b dargestellt, flächig miteinander verschweißt.

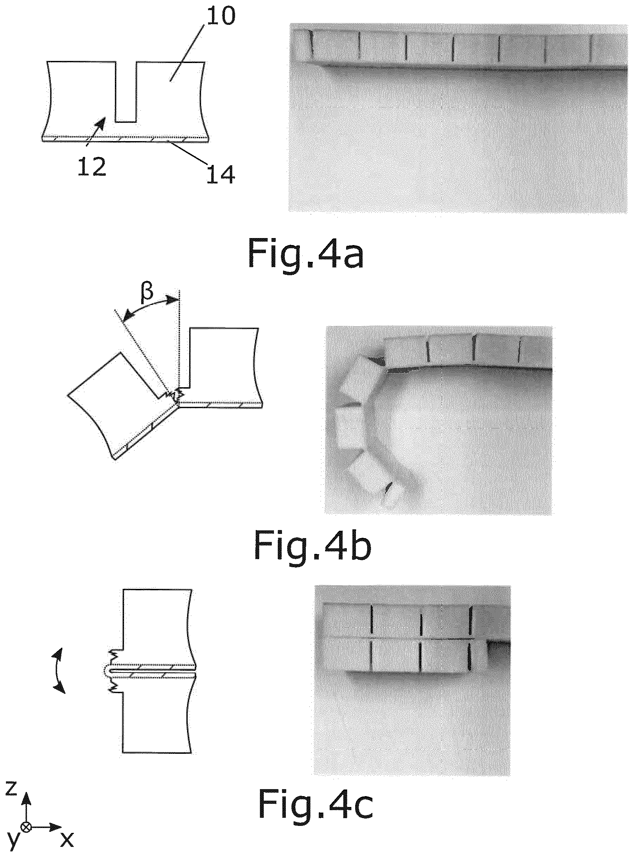

In der Handhabung des konturierten Strukturelements 100 oder für Sandwich-Verbundelemente mit Krümmungen in unterschiedliche Richtungen kann es vorkommen, dass das konturierte Strukturelement 100 so gebogen wird, dass der Zwischenraum 32 sich im Vergleich zu dem planen Zustand des konturierten Strukturelements 100 vergrößert. In der Fig. 4a bis Fig. 4c ist solch eine Krümmung des konturierten Strukturelements 100 um einen Winkel $\beta$ in drei Zuständen zwischen 0°, einem planen konturierten Strukturelement 100, und 180°, einem maximal gebogenen konturierten Strukturelement 100, dargestellt. In der Fig. 4b ist ein Winkel $\beta$ von etwa 50° dargestellt, wobei ein nicht verdichteter Teil der Verbindungsschicht 12 gebrochen ist und die Körperelemente 10 ausschließlich mittels der thermisch verdichteten Schicht 14 zusammengehalten werden. Die Körperelemente 10 können weiter bis zu dem in der Fig. 4c dargestellten Zustand gekrümmt werden, ohne ein Reißen der thermisch verdichteten Schicht 14 hervorzurufen. Ein Biegezyklus zwischen 0° und 180° kann für ein konturiertes Strukturelement 100 mit einer thermisch verdichteten Schicht 14 mehr als 20, bevorzugt mehr als 40, besonders bevorzugt mehr als 300, ganz besonders bevorzugt mehr als 1000-fach wiederholt werden, ohne ein Versagen der thermisch verdichteten Schicht 14 hervorzurufen. Falls die thermisch verdichtete Schicht 14 nicht vorhanden ist, brechen die Körperelemente 10 bereits bei einer geringen mittleren Biegezykluszahl von weniger als 20 Zyklen auseinander.

Die hohe Dauerfestigkeit der thermisch verdichteten Schicht 14 ermöglicht den Ersatz eines Scrimmaterials, wobei die Stabilität nicht nur für eine geringe Krümmung in einer Form ausreichend gewährleistet ist, sondern auch für Beanspruchungen in der Handhabung des konturierten Strukturelements 100; zum Beispiel, wenn das konturierte Strukturelement 100 zugeschnitten oder in einer Form ausgerichtet werden soll.

Für ein konturiertes Strukturelement 100 mit beidseitig thermisch verdichteten Schichten 14 ist es gemäß der Fig. 5a möglich, dass die Verbindungsschicht 10 entweder entlang der Grundfläche 26 oder der Grundfläche 26 gegenüberliegenden Oberfläche der Körperelemente 24 verläuft. Mit dieser Unterteilung kann ein konturiertes Strukturelement 100 für Formen mit wechselnden Krümmungsrichtungen hergestellt werden.

Alternativ können auch zwei konturierte Strukturelemente 100 gemäß der Fig. 6a über ihre Grundflächen 26 miteinander verschweißt werden. Dieses zweifach konturierte Strukturelement ist, wie in der Fig. 6b dargestellt, ebenfalls für wechselnde Krümmungsrichtungen geeignet.

Vorzugsweise wird die verdichtete, bevorzugt teilversiegelte Schicht 14 durch Heißdrahtschneiden erzeugt. Mit dem Heißdrahtschneideverfahren kann das konturierte Strukturelement 100 aus einem Schaumstoffblock zugeschnitten und gleichzeitig kann die Grundfläche 26 des Strukturelements 100, sowie die der Grundfläche 26 gegenüberliegende Oberfläche 24 der Körperelemente 10 verdichtet und teilversiegelt werden.

Das in der Fig. 1 dargestellte konturierte Strukturelement 100 wird aus einem vorzugsweise plattenförmigen Strukturelement aus extrusionsgeschäumten thermoplastischem Kunststoff mit vorzugsweise thermisch verdichteten Oberflächen hergestellt. Anschließend wird das plattenförmige Strukturelement bis auf eine Verbindungsschicht 12 in mehrere Körperelemente 10 insbesondere mittels Schneiden von Vertiefungen in zumindest eine Seite des plattenförmigen Strukturelements mittels Säge-, Lasergravier-, Fräs-, oder Heißschneideverfahren unterteilt.

Ein Sandwich-Verbundelement kann hergestellt werden, indem auf die Grundfläche 26 des konturierten Strukturelements 100 und die der Grundfläche 26 gegenüberliegende Fläche 24 der Körperelemente 10 eine Deckschicht, insbesondere aus glasfaserverstärktem Kunststoff, vorzugsweise mittels eines Harzes festgelegt wird.

Vorzugsweise ist eine erste Deckschicht und/oder eine zweite Deckschicht im Infusionsverfahren festgelegt.

Das soweit beschriebene konturierte Strukturelement 100 kann in vielfältiger Art und Weise abgewandelt oder modifiziert werden, ohne vom Erfindungsgedanken abzuweichen. So ist es zum Beispiel denkbar, mit einem Heißdraht, Laser oder Heißelementstift die Zwischenräume 32 der Körperelemente 10 thermisch zu verdichten. So kann zum Beispiel das in Fig. 6a dargestellte zweifach konturierte Strukturelement in einem Stück hergestellt werden, indem von zwei Seiten in ein plattenförmiges Strukturelement geschnitten wird und anschließend die Verbindungsschicht 12 lokal thermisch verdichtet wird oder indem ein Lasergravurprozess oder ein Heißelement (Draht, Stift oder ein Heißschwert) die Oberflächen der Zwischenräume 32 zwischen den Körperelementen 10 im Schneideprozess thermisch verdichten.

**Bezugszeichenliste**

| | |
|---|---|
| 10 | Körperelement |
| 12 | Verbindungsschicht |
| 14 | thermisch verdichtete Schicht |
| 16 | Oberfläche der Verbindungsschicht |
| 18 | Oberfläche des Körperelements |
| 20 | Oberfläche des Körperelements in einem Zwischenraum |
| 24 | Der Grundfläche gegenüberliegende Oberfläche |
| 26 | Grundfläche des konturierten Strukturelements |
| 30 | Kontaktfläche der Körperelemente |
| 32 | Zwischenraum zwischen den Körperelementen |
| 100 | Konturiertes Strukturelement |
| x,y,z | Raumachsen eines kartesischen Koordinatensystems |
| α | Krümmungswinkel |
| β | Öffnungswinkel zwischen Körperelementen |
| γ | Öffnungswinkel zwischen trapezoidalen Körperelementen |
| h | Höhe des konturierten Strukturelements |
| b | Breite des Zwischenraums |
| d | Dicke der thermisch verdichteten Schicht |

**Patentansprüche**

1. Konturiertes Strukturelement (100) zur Verwendung als Kernschicht in einem gekrümmten Sandwich-Verbundelement, wobei das konturierte Strukturelement (100) aus einem thermoplastischen Kunststoffschaum, insbesondere PET, gebildet ist, wobei das konturierte Strukturelement (100) bis auf eine Verbindungsschicht (12) in mehrere Körperelemente (10) unterteilt ist und wobei die Körperelemente (10) und die Verbindungsschicht (12) parallel zu einer Grundfläche (26) des in einem planen Zustand befindlichen konturierten Strukturelements (100) ausgerichtet sind, wobei zumindest eine Oberflächenschicht (16) der Verbindungschicht (12) und die daran angrenzende Oberflächenschicht (18) der Körperelemente (10) zumindest teilweise eine thermisch verdichtete Schicht (14) aufweisen und wobei die Körperelemente (10), die Verbindungsschicht (12) und die thermisch verdichtete Schicht (14) aus dem gleichen Material ausgebildet sind,
**dadurch gekennzeichnet,**
**dass** die zumindest eine Oberflächenschicht (16) der Verbindungsschicht (12) und die daran angrenzende Oberflächenschicht (18) der Körperelemente (10) die Grundfläche (26) des konturierten Strukturelements (100) ausbilden und dass sich die thermisch verdichtete Schicht (14), bevorzugt eine teilversiegelte Schicht, vollflächig über die Grundfläche (26) des konturierten Strukturelements (100) erstreckt.

2. Konturiertes Strukturelement nach dem Anspruch 1,
**dadurch gekennzeichnet,**
**dass** auch eine im planen Zustand der Strukturelemente (100) parallel zur Grundfläche (26) ausgerichtete, der Verbindungsschicht (12) gegenüberliegende Oberfläche der Körperelemente (24) eine thermisch verdichtete, bevorzugt teilversiegelte Oberflächenschicht (14) aufweist.

3. Konturiertes Strukturelement nach dem Anspruch 1 oder 2,
**dadurch gekennzeichnet,**
**dass** die thermisch verdichtete Schicht (14) in einem planen Zustand des Strukturelements (100) eine plane und/oder gleichmäßig starke Schicht ausbildet.

4. Konturiertes Strukturelement nach einem der Ansprüche 1 bis 3,
**dadurch gekennzeichnet,**
**dass** zumindest die für den Kontakt mit Harzmaterial vorgesehenen Oberflächen des Strukturelements (100) thermisch teilversiegelt sind.

5. Konturiertes Strukturelement nach einem der Ansprüche 1 bis 4,

**dadurch gekennzeichnet,**
**dass** die Dicke (d) der thermisch verdichteten Schicht (14) im planen Zustand des Strukturelements (100) senkrecht zur Grundfläche zwischen 0.01mm und 1.00mm, bevorzugt zwischen 0.10mm und 0.70mm, besonders bevorzugt zwischen 0.15mm und 0.60mm, ganz besonders bevorzugt zwischen 0.25mm und 0.35mm, liegt.

6. Konturiertes Strukturelement nach einem der Ansprüche 1 bis 5,
**dadurch gekennzeichnet,**
**dass** die thermisch verdichtete Schicht (14) die Verbindungsschicht (12) ausbildet.

7. Konturiertes Strukturelement nach einem der Ansprüche 1 bis 6,
**dadurch gekennzeichnet,**
**dass** ein Glanzwert einer Oberfläche der thermisch verdichteten Schicht (14) gemessen bei 60° nach DIN 67530-1982 zwischen 2 und 10 Glanzeinheiten beträgt.

8. Konturiertes Strukturelement nach einem der Ansprüche 1 bis 7,
**dadurch gekennzeichnet,**
**dass** das Strukturelement (100) in Körperelemente (10) nach einem regelmäßigen schachbrettartigen und/oder hexagonalen Muster unterteilt ist und/oder die Körperelemente (10) einen rechteckigen Querschnitt (20) oder trapezoidalen Querschnitt (22) aufweisen.

9. Konturiertes Strukturelement nach einem der Ansprüche 1 bis 8,
**dadurch gekennzeichnet,**
**dass** im gekrümmten Zustand des Strukturelements (100) die Körperelemente (10), bevorzugt flächig miteinander thermisch verschweißt sind.

10. Konturiertes Strukturelement nach einem der vorangehenden Ansprüche 1 bis 9,
**dadurch gekennzeichnet,**
**dass** die verdichtete, bevorzugt teilversiegelte, Schicht (14) durch Heißdrahtschneiden erzeugt wird.

11. Verfahren zum Herstellen eines konturierten Strukturelementes nach einem der vorangehenden Ansprüche 1 bis 10 mit den Schritten:

- Bereitstellen eines vorzugsweise plattenförmigen Strukturelements aus extrusionsgeschäumten thermoplastischem Kunststoff,
- Erzeugen, insbesondere Schneiden von Vertiefungen in zumindest eine Seite, insbesondere die der Grundfläche 26 des plattenförmigen Strukturelements gegenüberliegenden Seite mittels Säge-, Lasergravier-, Fräs-, oder Heißschneideverfahren, sodass das plattenförmige Strukturelement bis auf eine Verbindungsschicht (12) in mehrere Körperelemente (10) unterteilt wird, **gekennzeichnet durch**
Erzeugen einer thermisch verdichteten Schicht (14) in zumindest einer Oberflächenschicht (16) der Verbindungschicht (12) und zumindest teilweise in der daran angrenzenden Oberflächenschicht (18) der Körperelemente (10), und in der Grundfläche (26).

12. Verfahren zur Herstellung eines einseitigen oder mehrseitigen gekrümmten Sandwich-Verbundelements mit einem konturierten Strukturelement nach einem der Ansprüche 1 bis 10 mit den Schritten:

- Einseitiges oder mehrseitiges krümmen des konturierten Strukturelements (100),
- Verbinden zumindest einer Seite des konturierten Strukturelements (100) mit einer Deckschichte aus Klebeharz, insbesondere einem faserverstärkten Kunststoff, bevorzugt in einem Infusionsverfahren.

13. Einseitig oder mehrseitig gekrümmtes Sandwich-Verbundelement, insbesondere zur Herstellung von Windflügeln für Windkraftanlagen und/oder für Anwendungen im Bereich Marine und/oder im Bereich Schienenverkehr und/oder im Massentransport auf der Straße und/oder für strukturelle Anwendungen im Baubereich, mit einem konturierten Strukturelement nach einem der Ansprüche 1 bis 10 als Kernschicht, wobei auf zumindest einer Seite des konturierten Strukturelements eine Deckschicht, insbesondere gebildet aus oder umfassend faserverstärkten Kunststoff, mittels eines Klebeharzes festgelegt ist.

**Claims**

1.  A contoured structural element (100) for being used as a core layer in a bent sandwich composite element, the contoured structural element (100) being made of a thermoplastic plastic foam, in particular PET, the contoured structural element (100) being divided down to a joining layer (12) into several body elements (10) and the body elements (10) and the joining layer (12) being oriented parallel to a base (26) of the contoured structural element (100) which is in a plane state, at least a surface layer (16) of the joining layer (12) and the surface layer (18) of the body elements (10) which is adjacent thereto having at least partially a thermally compacted layer (14) and the body elements (10), the joining layer (12) and the thermally compacted layer (14) being made of the same material,
    **characterized in that**
    at least a surface layer (16) of the joining layer (12) and the surface layer (18) of the body elements (10) which is adjacent thereto realize the base (26) of the contoured structural element (100) and **in that** the thermally compacted layer (14), preferably a partially sealed layer, extends across the entire surface of the base (26) of the contoured structural element (100).

2.  The contoured structural element according to claim 1,
    **characterized in that**
    a surface of the body elements (24) which is opposite the joining layer (12) and which is oriented parallel to the base (26) in the plane state of the structural elements (100) also has a thermally compacted surface layer (14), which is preferably partially sealed.

3.  The contoured structural element according to claim 1 or 2,
    **characterized in that**
    the thermally compacted layer (14) realizes a plane and/or evenly strong layer in a plane state of the structural element (100).

4.  The contoured structural element according to any one of claims 1 to 3,
    **characterized in that**
    at least the surfaces of the structural element (100) which are intended for contact with resin material are thermally partially sealed.

5.  The contoured structural element according to any one of claims 1 to 4,
    **characterized in that**
    the thickness (d) of the thermally compacted layer (14) perpendicular to the base is between 0,01 mm and 1,00 mm, preferably between 0,10 mm and 0,70 mm, especially preferably between 0,15 mm and 0,60 mm, most preferably between 0,25 mm and 0,35 mm, in the plane state of the structural element (100).

6.  The contoured structural element according to any one of claims 1 to 5,
    **characterized in that**
    the thermally compacted layer (14) realizes the joining layer (12).

7.  The contoured structural element according to any one of claims 1 to 6,
    **characterized in that**
    a gloss value of a surface of the thermally compacted layer (14) measured at 60° according to DIN 67530-1982 is between 2 and 10 gloss units.

8.  The contoured structural element according to any one of claims 1 to 7,
    **characterized in that**
    the structural element (100) is divided into body elements (10) according to a regular checkered and/or hexagonal pattern and/or the body elements (10) have a rectangular cross section (20) or a trapezoidal cross section (22).

9.  The contoured structural element according to any one of claims 1 to 8,
    **characterized in that**
    the body elements (10) are thermally welded to each other, preferably their surfaces, in the bent state of the structural element (100).

10. The contoured structural element according to any one of claims 1 to 9,
    **characterized in that**

the compacted layer (14), which is preferably partially sealed, is generated by hot-wire cutting.

11. A method for fabricating a contoured structural element according to any one of the preceding claims 1 to 10, said method comprising the steps of:

- providing a preferably panel-shaped structural element made of an extrusion-foamed thermoplastic resin,
- producing, in particular cutting, recesses in at least one side, in particular the side opposite the base 26 of the panel-shaped structural element, by means of sawing, laser engraving, milling or hot cutting methods such that the panel-shaped structural element is divided down to a joining layer (12) into several body elements (10),

**characterized by**
producing a thermally compacted layer (14) in at least a surface layer (16) of the joining layer (12) and at least partially in the surface layer (18) of the body elements (10) which is adjacent thereto, and in the base (26).

12. A method for the fabrication of a sandwich composite element bent on one side or on several sides comprising a contoured structural element according to any one of claims 1 to 10, said method comprising the steps of:

- bending the contoured structural element (100) on one side or on several sides,
- bonding at least of one side of the contoured structural element (100) to a face sheet made of adhesive resin, in particular a fiber-reinforced plastic, preferably in an infusion method.

13. A sandwich composite element bent on one side or on several sides, in particular for the fabrication of a wind turbine blade for wind turbines and/or for applications in the marine sector and/or in the rail transport sector and/or in mass transportation on the road and/or for structural applications in the construction sector, said sandwich composite element bent on one side or on several sides comprising a contoured structural element according to any one of claims 1 to 10 as a core layer, wherein a face sheet, which is in particular made of or comprises fiber-reinforced plastic, is fixed by means of an adhesive resin on at least one side of the contoured structural element.

**Revendications**

1. Élément de structure (100) à contours destiné à être utilisé comme couche d'âme dans un élément composite sandwich courbé, ledit élément de structure (100) à contours étant fait d'une mousse de matière plastique thermoplastique, notamment de PET, l'élément de structure (100) à contours étant divisé jusqu'à une couche de liaison (12) en plusieurs éléments de corps (10) et les éléments de corps (10) et la couche de liaison (12) étant orientés parallèlement à une base (26) de l'élément de structure (100) à contours qui se trouve dans un état plan, au moins une couche de surface (16) de la couche de liaison (12) et la couche de surface (18) des éléments de corps (10) qui est adjacente à celle-ci ont au moins partiellement une couche (14) thermiquement compactée et les éléments de corps (10), la couche de liaison (12) et la couche (14) thermiquement compactée étant faits du même matériau,
**caractérisé en ce que**
l'au moins une couche de surface (16) de la couche de liaison (12) et la couche de surface (18) des éléments de corps (10) qui est adjacente à celle-ci réalisent la base (26) de l'élément de structure (100) à contours et **en ce que** la couche (14) thermiquement compactée, de préférence une couche partiellement scellée, s'étend sur toute la surface de la base (26) de l'élément de structure (100) à contours.

2. Élément de structure à contours selon la revendication 1,
**caractérisé en ce**
**qu'**une surface des éléments de corps (24) qui est opposée à la couche de liaison (12) et qui est orientée parallèlement à la base (26) dans l'état plan des éléments de structure (100) aussi a une couche de surface (14) thermiquement compactée, de préférence partiellement scellée.

3. Élément de structure à contours selon la revendication 1 ou 2,
**caractérisé en ce que**
la couche (14) thermiquement compactée réalise une couche plane et/ou uniformément forte dans un état plan de l'élément de structure (100).

4. Élément de structure à contours selon l'une quelconque des revendications 1 à 3,
**caractérisé en ce**

**qu'**au moins les surfaces de l'élément de structure (100) qui sont destinées à être en contact avec du matériau de résine sont thermiquement partiellement scellées.

5. Élément de structure à contours selon l'une quelconque des revendications 1 à 4,
   **caractérisé en ce que**
   l'épaisseur (d) de la couche (14) thermiquement compactée perpendiculairement à la base est comprise entre 0,01 mm et 1,00 mm, de préférence entre 0,10 mm et 0,70 mm, de manière particulièrement préférée entre 0,15 mm et 0,60 mm, de manière tout à fait préférée entre 0,25 mm et 0,35 mm dans l'état plan de l'élément de structure (100).

6. Élément de structure à contours selon l'une quelconque des revendications 1 à 5,
   **caractérisé en ce que**
   la couche (14) thermiquement compactée réalise la couche de liaison (12).

7. Élément de structure à contours selon l'une quelconque des revendications 1 à 6,
   **caractérisé en ce**
   **qu'**une valeur de brillant d'une surface de la couche (14) thermiquement compactée mesurée à 60° selon la norme DIN 67530-1982 est comprise entre 2 et 10 unités de brillant.

8. Élément de structure à contours selon l'une quelconque des revendications 1 à 7,
   **caractérisé en ce que**
   l'élément de structure (100) est divisé en éléments de corps (10) selon un motif régulier en damier et/ou hexagonal et/ou les éléments de corps (10) ont une section transversale (20) rectangulaire ou une section transversale (22) trapézoïdale.

9. Élément de structure à contours selon l'une quelconque des revendications 1 à 8,
   **caractérisé en ce que**
   les éléments de corps (10) sont soudés thermiquement l'un à l'autre, de préférence leurs surfaces, dans l'état courbé de l'élément de structure (100).

10. Élément de structure à contours selon l'une quelconque des revendications 1 à 9,
    **caractérisé en ce que**
    la couche (14) compactée, de préférence partiellement scellée, est produite par découpe au fil chaud.

11. Procédé pour fabriquer un élément de structure à contours selon l'une quelconque des revendications 1 à 10, ledit procédé comprenant les étapes suivantes :

    - fournir un élément de structure, de préférence en forme de panneau, en résine thermoplastique moussée par extrusion,
    - produire, notamment découper, des cavités dans au moins un côté, notamment le côté opposé à la base 26 de l'élément de structure en forme de panneau, au moyen de procédés de sciage, de gravure au laser, de fraisage ou de découpe à chaud de sorte que l'élément de structure en forme de panneau soit divisé jusqu'à une couche de liaison (12) en plusieurs éléments de corps (10),

    **caractérisé par**
    la production d'une couche (14) thermiquement compactée dans au moins une couche de surface (16) de la couche de liaison (12) et au moins partiellement dans la couche de surface (18) des éléments de corps (10) qui est adjacente à celle-ci, et dans la base (26).

12. Procédé pour la fabrication d'un élément composite sandwich courbé d'un côté ou de plusieurs côtés comprenant un élément de structure à contours selon l'une quelconque des revendications 1 à 10, ledit procédé comprenant les étapes suivantes :

    - courber l'élément de structure (100) à contours d'un côté ou de plusieurs côtés,
    - lier au moins un côté de l'élément de structure (100) à contours à une peau en résine adhésive, notamment une matière plastique renforcée de fibres, de préférence dans un procédé d'infusion.

13. Élément composite sandwich courbé d'un côté ou de plusieurs côtés, notamment pour la fabrication de pales pour des éoliennes et/ou pour des applications dans le domaine de la marine et/ou dans le domaine du transport ferroviaire et/ou dans le transport de masse sur la route et/ou pour des applications structurelles dans le domaine de la construction, ledit élément composite sandwich courbé d'un côté ou de plusieurs côtés comprenant un élément de structure à contours selon l'une quelconque des revendications 1 à 10 comme couche d'âme, dans lequel une peau, notamment faite de ou comprenant une matière plastique renforcée de fibres, étant fixée au moyen d'une résine adhésive sur au moins un côté de l'élément de structure à contours.

Fig. 1

Fig.2a

Fig.2b

Fig.3a        Fig.3b

**Fig.4a**

**Fig.4b**

**Fig.4c**

Fig.5a

Fig.5b

Fig.6a

Fig.6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012102689 A1
- US 3540967 A1
- EP 2483076 B1
- DE 102015203375 A1
- US 3841958 A
- WO 2020064717 A2
- US 4121008 A
- DE 10034990 A1
- US 3964354 A
- WO 2009003477 A1